(19) Europäisches Patentamt / European Patent Office / Office européen des brevets

(11) **EP 1 744 133 A1**

(12) **EUROPÄISCHE PATENTANMELDUNG**

(43) Veröffentlichungstag:
**17.01.2007 Patentblatt 2007/03**

(51) Int Cl.:
***G01J 5/00*** *(2006.01)*          ***G01J 5/52*** *(2006.01)*

(21) Anmeldenummer: **06014578.6**

(22) Anmeldetag: **13.07.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **13.07.2005 DE 102005032750**

(71) Anmelder: **Raytek GmbH**
**13127 Berlin (DE)**

(72) Erfinder:
• **Möllmann, Klaus-Peter**
**12621 Berlin (DE)**
• **Jankowski, Tilo**
**12163 Berlin (DE)**

(74) Vertreter: **Rummler, Felix et al**
**R.G.C. Jenkins & Co**
**Franziskanerstrasse 16**
**81669 München (DE)**

(54) **Referenztemperaturvorrichtung**

(57)     Erfindungsgemäß ist eine Referenztemperaturvorrichtung (10) geschaffen für eine Messanordnung zur Bestimmung der Temperatur und/oder des Emissionsgrades eines Messobjektes mit einem Sensor (16) zur Erfassung von von dem Messobjekt (13) abgestrahlter und reflektierter Wärmestrahlung, wobei die Referenztemperaturvorrichtung auf eine vorbestimmte Referenztemperatur aufheizbar und in der Messanordnung gegenüber dem Messobjekt anzuordnen ist, um Wärmestrahlung abhängig von der Referenztemperatur auf das Messobjekt abzustrahlen, wobei die dem Messobjekt zuzuwendende Oberfläche der Referenztemperaturvorrichtung eine unebene Struktur (17) aufweist, zur Verhinderung von Mehrflachreflexionen der Wärmestrahlung zwischen der Referenztemperaturvorrichtung und dem Messobjekt vor Erreichen des Sensors. Durch die Verhinderung von Mehrfachrelexionen zwischen dem Messobjekt und der Referenztemperaturvorrichtung erfasst der Sensor nur Wärmestrahlung, die entweder von dem Messobjekt abgestrahlt (Eigenstrahlung) oder direkt (einfach) von dem Messobjekt auf den Sensor reflektiert wird. Dies erhöht die Genauigkeit bei der Bestimmung der Temperatur oder des Emissionsgrades des Messobjektes. Dies fällt insbesondere ins Gewicht bei Messobjekten mit niedrigem Emissionsgrad, wie beispielsweise Aluminium.

Fig. 2

**Beschreibung**

Die vorliegende Erfindung betrifft eine Vorrichtung und ein Verfahren zur berührungslosen Messung der Temperatur eines Objektes.

Bei der berührungslosen Messung der Temperatur eines Objekts wird die von dem Objekt abgestrahlte Wärmestrahlung durch einen Detektor (Pyrometer) erfasst und in ein elektrisches Signal umgewandelt. Die Wärmestrahlung eines Körpers ist dabei abhängig von dessen Emissionsgrad. Der Emissionsgrad gibt an, wieviel weniger Strahlung ein realer Strahler gegenüber einem idealen Strahler (dem sogenannten "Schwarzen Strahler") gleicher Temperatur aussendet.

Die Abhängigkeit der gemessenen Wärmestrahlung vom Emissionsgrad des Messobjekts ist problematisch. Messobjekte sind in der Regel nicht-schwarze Strahler mit einem geringen Emissionsgrad, der eine Korrektur der gemessenen Wärmestrahlung in Abhängigkeit des Emissionsgrades notwendig macht, um so Temperaturmessfehler zu minimieren. Bei Messobjekten mit hohen Reflexionsgraden erfasst der Detektor neben der von dem Messobjekt abgestrahlten Wärmestrahlung auch durch das Messobjekt reflektierte Umgebungsstrahlung. Da der Anteil der reflektierten Umgebungsstrahlung bei herkömmlichen berührungslosen Messvorrichtungen nicht von der durch das Messobjekt emittierten Wärmestrahlung unterschieden wird, führt dies zu Messfehlern.

Um dieses Problem zu vermeiden sind Quotientenpyrometer bekannt (auch genannt Verhältnispyrometer, 2-Farben-Pyrometer), bei denen nicht die Intensität in nur einem Wellenlängenbereich gemessen, sondern das Verhältnis der Intensitäten bei zwei unterschiedlichen "Farben" gebildet wird. Das bedeutet, dass die Temperatur nicht aufgrund der Helligkeit, sondern aufgrund der Farbe der Strahlung bestimmt wird.
Bei diesem Verfahren spielt der Emissionsgrad bei der Verhältnisbildung (Kürzen bei der Division) für die Messung keine Rolle, vorausgesetzt er ist für das betreffende Messobjekt nur sehr schwach wellenlängenabhängig.

DE 197 39 338 A1 beschreibt eine Vorrichtung zur Messung des Emissionsgrades einer Probenoberfläche. Die Vorrichtung weist einen ersten und einen zweiten Wärmestrahler auf, mittels derer die Probenoberfläche mit unterschiedlicher Wärmestrahlung bestrahlt wird. Durch Messung der Emission von der Probenoberfläche bei unterschiedlicher Wärmebestrahlung kann der Emissionsgrad der Probe bestimmt werden. Dabei ergibt sich die Strahlungsemission von der Probenoberfläche bei unterschiedlicher Wärmebestrahlung nach folgenden Gleichungen:

$$P_1 = \int\limits_{\lambda_1}^{\lambda_2} \varepsilon_0(\lambda, T_0) M_\lambda(\lambda, T_0) d\lambda + \int\limits_{\lambda_1}^{\lambda_2} \left(1 - \varepsilon_0(\lambda, T_0)\right) \varepsilon_1(\lambda, T_1) M_\lambda(\lambda, T_1) d\lambda$$

$$P_2 = \int\limits_{\lambda_1}^{\lambda_2} \varepsilon_0(\lambda, T_0) M_\lambda(\lambda, T_0) d\lambda + \int\limits_{\lambda_1}^{\lambda_2} \left(1 - \varepsilon_0(\lambda, T_0)\right) \varepsilon_2(\lambda, T_2) M_\lambda(\lambda, T_2) d\lambda$$

wobei

$P_1$ = Intensität von der Probenoberfläche bei Bestrahlung mit $T_1$
$P_2$ = Intensität von der Probenoberfläche bei Bestrahlung mit $T_2$
$T_0$ = Temperatur der Probenoberfläche
$T_1$ = Temperatur des ersten Wärmestrahlers
$T_2$ = Temperatur des zweiten Wärmestrahlers
$\varepsilon_0$ = Emissionsgrad der Probe
$\varepsilon_1$ = Emissionsgrad des ersten Wärmestrahlers
$\varepsilon_2$ = Emissionsgrad des zweiten Wärmestrahlers
$\sigma$ = Stefan-Boltzmann-Konstante
$M_\lambda(\lambda, T)$ = spezifische spektrale Ausstrahlung bei T

Daraus ergibt sich für den Emissionsgrad der Probe $\varepsilon_0$:

$$\varepsilon_0 = \frac{P_1 - P_2}{\int\limits_{\lambda_1}^{\lambda_2}\{\varepsilon_2\, M_\lambda(\lambda, T_2) - \varepsilon_1\, M_\lambda(\lambda, T_1)\}\, d\lambda}$$

US 6,747,607 B1 offenbart eine Anordnung zum Abschirmen von Sensoren vor ungewünschter Strahlung bestimmter Wellenlängen. Die Anordnung weist ein reflektierendes Element mit einer darauf ausgebildeten Oberflächenstruktur auf, die derart ausgestaltet ist, dass nur der Anteil einfallender Strahlung, welcher sich in einem bestimmten, unschädlichen Wellenlängenbereich befindet, auf einen Sensor umgelenkt wird. US 6,747,607 B1 befasst sich jedoch nicht mit der Messung des Emissionsgrades eines Messobjektes oder der Abschirmung von reflektierter Strahlung.

Zusammengefasst bietet der Stand der Technik keine Lösung des Problems von Messfehlern, die insbesondere bei Messobjekten mit geringem Emissionsgrad beispielsweise aufgrund von unerwünschten Reflexionen entstehen.

Eine Aufgabe der vorliegenden Erfindung ist es, sich dieser Problematik anzunehmen. Insbesondere soll die vorliegende Erfindung die Genauigkeit der Temperaturmessung von Messobjekten mit geringem Emissionsgrad verbessern. Dabei sollen vor allem Temperaturmessfehler korrigiert werden, die aufgrund von Mehrfachreflexionen von Wärmestrahlung entstehen. Darüber hinaus ist es die Aufgabe einer Ausgestaltung der Erfindung, eine Temperaturmessung von Messobjekten mit beliebigem Emissionsgrad zu ermöglichen. Die Aufgabe einer weiteren Ausgestaltung der Erfindung ist es, ein Verfahren zur Bestimmung des Emissionsgrades eines Messobjektes zu schaffen.

Diese Aufgaben werden durch die in den Ansprüchen angegebene und anhand eines Ausführungsbeispieles beschriebene Erfindung gelöst.

Erfindungsgemäß ist eine Referenztemperaturvorrichtung für eine Messanordnung zur Bestimmung der Temperatur und/oder des Emissionsgrades eines Messobjektes mit einem Sensor zur Erfassung von von dem Messobjekt abgestrahlter und reflektierter Wärmestrahlung, wobei die Referenztemperaturvorrichtung auf eine vorbestimmte Referenztemperatur aufheizbar und in der Messanordnung gegenüber dem Messobjekt anzuordnen ist, um Wärmestrahlung abhängig von der Referenztemperatur auf das Messobjekt abzustrahlen, wobei die dem Messobjekt zuzuwendende Oberfläche der Referenztemperaturvorrichtung eine unebene Struktur aufweist, zur Verhinderung von Mehrflachreflexionen der Wärmestrahlung zwischen der Referenztemperaturvorrichtung und dem Messobjekt vor Erreichen des Sensors.

Durch die unebene Strukturierung der Oberfläche der Referenztemperaturvorrichtung werden Mehrfachrelexionen zwischen dem Messobjekt und der Referenztemperaturvorrichtung verhindert. Damit erfasst der Sensor nur Wärmestrahlung, die entweder von dem Messobjekt abgestrahlt (Eigenstrahlung) oder direkt (einfach) von dem Messobjekt auf den Sensor reflektiert wird. Mehrfach zwischen der Referenztemperaturvorrichtung und dem Messobjekt hin- und herreflektierte Wärmestrahlung wird durch den Sensor nicht erfasst. Dies hat eine Erhöhung der Genauigkeit bei der Messung der Temperatur oder der Bestimmung des Emissionsgrades des Messobjektes zur Folge, welche sich insbesondere bei Messobjekten mit niedrigem Emissionsgrad auswirkt (z.B. Aluminium).

Generell ermöglicht die Referenztemperaturfläche dadurch eine Verbesserung der berührungslosen Temperaturmessung von Materialien mit beliebigem Emissionsgrad.

In einer Ausgestaltung der Erfindung ist die unebene Strukturierung durch eine Vielzahl von zueinander parallelen Graten oder Kämmen gebildet. Insbesondere weist jeder der Grate oder Kämme eine erste und eine zweite Fläche auf, wobei die ersten und zweiten Flächen einen Winkel $\beta$ einschließen, und der Reflexionswinkel der Wärmestrahlung von der ersten Fläche auf den Sensor $2\alpha$ beträgt, wobei der Sensor ein kegelförmiges Erfassungsfeld aufweist, und die Erzeugenden des Kegels einen Winkel $\gamma$ einschließen, und wobei $\alpha + \beta + \gamma = 90°$. Die Referenztemperaturvorrichtung kann außerdem eine Aussparung aufweisen, durch welche die Wärmestrahlung von dem Messobjekt zu dem Sensor gelangt.

Die Messung der von dem Messobjekt abgestrahlten und reflektierten Wärmestrahlung erfolgt somit nur innerhalb einer räumlich begrenzten Messfläche. Die Größe der Messfläche wird durch die Größe des Erfassungsfeldes des Sensors und/oder der Aussparung in der Referenztemperaturvorrichtung begrenzt.

Vorzugsweise besteht die Referenztemperaturvorrichtung aus Kupfer. Kupfer hat u.a. den Vorteil, dass die Referenztemperaturvorrichtung zügig und gleichmäßig auf die vorbestimmte Referenztemperatur erwärmt werden kann.

Vorzugsweise weist die unebene Struktur eine Lackschicht auf, deren Emissionsgrad größer als 98% ist. Dadurch wird die Referenztemperatur der Referenztemperaturvorrichtung effizient in Wärmestrahlung umgesetzt.

Vorzugsweise weist die Referenztemperaturvorrichtung außerdem eine Aluminiumschicht an der der unebenen Struktur entgegengesetzten Seite auf. Die Aluminiumschicht trägt dazu bei, eine Erwärmung der Referenztemperaturvorrichtung auf die vorbestimmte Referenztemperatur gleichmäßig zu verteilen.

In einer bevorzugten Ausgestaltung weist die Referenztemperaturvorrichtung einen Temperatursensor auf, der im Bereich oder in der Nähe der unebenen Struktur angeordnet ist, und der zur Messung und Kontrolle der vorbestimmten Referenztemperatur dient.

Erfindungsgemäß ist außerdem eine Messanordnung zur Bestimmung der Temperatur und/oder des Emissionsgrades eines Messobjektes geschaffen, mit einer Referenztemperaturvorrichtung wie vorhergehend beschrieben.

Eine solche Messanordnung lässt sich mit Vorteil in einem Verfahren zur Bestimmung des Emissionsgrades eines Messobjektes einsetzen, das folgende Schritte umfasst: Erwärmen der Referenztemperaturvorrichtung auf eine erste und anschließend auf eine zweite vorbestimmte Referenztemperatur; und jeweils für die erste und zweite vorbestimmte Referenztemperatur Bestimmen von durch das Messobjekt auf den Sensor abgestrahlter und reflektierter Wärmestrahlung zur Bestimmung des Emissionsgrades des Messobjektes.

Erfindungsgemäß ist weiterhin eine Messanordnung zur Bestimmung der Temperatur und/oder des Emissionsgrades eines Messobjektes geschaffen, die eine erste und eine zweite Referenztemperaturvorrichtung wie vorhergehend beschrieben aufweist.

Diese Messanordnung lässt sich mit Vorteil in einem Verfahren zur Bestimmung des Emissionsgrades eines Messobjektes einsetzen, das folgende Schritte umfasst: Erwärmen der ersten Referenztemperaturvorrichtung auf eine erste vorbestimmte Referenztemperatur; Erwärmen der zweiten Referenztemperaturvorrichtung auf eine zweite vorbestimmte Referenztemperatur; Bestrahlen des Messobjektes mit Wärmestrahlung durch die erste und anschließend durch die zweite Referenztemperaturvorrichtung; und jeweils Bestimmen von durch das Messobjekt auf den Sensor abgestrahlter und reflektierter Wärmestrahlung zur Bestimmung des Emissionsgrades des Messobjektes.

Die ersten und zweiten Referenztemperaturen sind voneinander verschieden (z.B. 80 bzw. 40°C). Die Bestimmung der durch das Messobjekt abgestrahlten und reflektierten Wärmestrahlung erfolgt vorzugsweise jeweils an der selben Stelle des Messobjektes.

Dieses Verfahren eignet sich insbesondere zur Bestimmung des Emissionsgrades von Aluminium, das einen hohen Reflexions- und einen niedrigen Emissionsgrad hat.

Eine beispielhafte Anwendung dieses Verfahrens findet sich in Walzwerken, wo Aluminiumplatten relativ zur Messanordnung und somit den beiden Referenztemperaturvorrichtungen bewegt werden.

Die Erfindung wird nun erläutert anhand einer beispielhaften Ausführung unter Bezugnahme auf die Zeichnungen. Es zeigen

Figur 1 schematisch einen Querschnitt durch eine konventionelle Messvorrichtung mit einer Referenztemperaturplatte mit ebener Oberfläche nach dem Stand der Technik; Figur 2 schematisch einen Querschnitt durch einen Teil einer Messvorrichtung mit einer Referenztemperaturplatte mit strukturierter Oberfläche nach einer Ausgestaltung der Erfindung; und

Figur 3 schematisch im Querschnitt eine genauere Darstellung eines Teiles der Messvorrichtung und der Referenztemperaturplatte aus Figur 2 mit Winkelangaben.

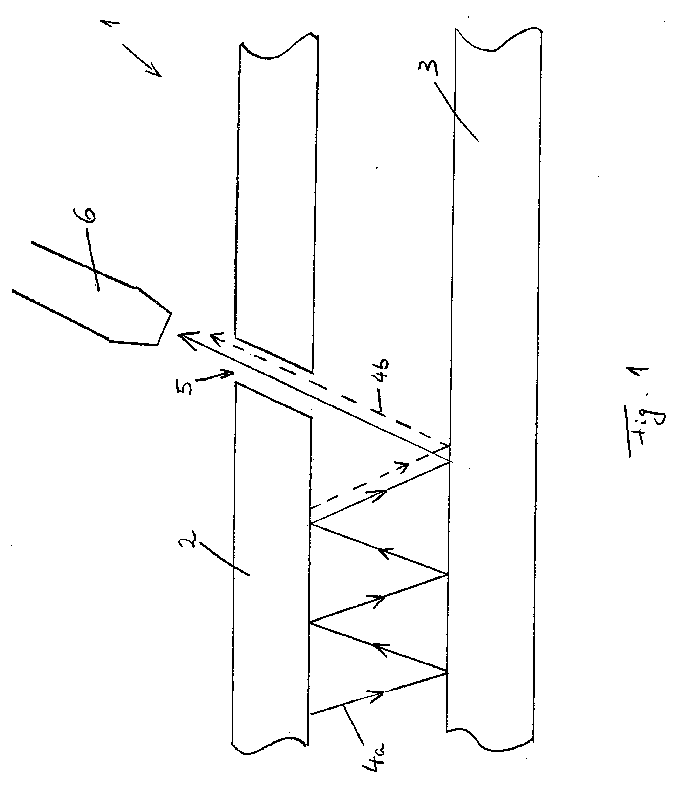

Figur 1 zeigt schematisch eine konventionelle Messvorrichtung 1 zur Darstellung von Mehrfachreflexionen zwischen einer ebenen Referenztemperaturplatte 2 und einem Messobjekt 3. In einer solchen Messvorrichtung wird die Referenztemperaturplatte 2 auf eine vorbestimmte erste Temperatur erwärmt, so dass die Referenztemperaturplatte 2 Wärmestrahlung 4a, 4b auf das Messobjekt 3 abstrahlt. Die von der Oberfläche des Messobjektes 3 abgestrahlte und reflektierte Wärmestrahlung 4a, 4b fällt durch einen Öffnung 5 in der Referenztemperaturplatte 2 auf einen Sensor 6, welcher die einfallende Wärmestrahlung erfasst und in ein elektrisches Signal umwandelt.

Zur Messung des Emissionsgrades des Messobjektes 3 wird dieses einer identischen zweiten Messvorrichtung zugeführt (nicht gezeigt), deren Referenztemperaturplatte auf eine zweite, von der ersten Temperatur abweichenden Temperatur erwärmt ist, und die dementsprechend mit Wärmestrahlung unterschiedlicher Intensität bestrahlt wird. Auch hier wird ein Teil der von der Oberfläche des Messobjektes 3 abgestrahlten und reflektierten Wärmestrahlung durch einen Sensor erfasst. Anhand der Sensorsignale der ersten und zweiten Messvorrichtung kann dann der Emissionsgrad des Messobjektes wie oben beschrieben gemessen werden.

Wie in Figur 1 anhand des Strahles 4a dargestellt kann es zwischen der Referenztemperaturplatte 2 und der Oberfläche des Messobjektes 3 zu Mehrfachreflexionen der Wärmestrahlung kommen. Als Folge dessen enthält die durch den Sensor 6 erfasste Wärmestrahlung neben der direkt vom Messobjekt abgestrahlten und der einfach reflektierten Wärmestrahlung (Strahl 4b) auch mehrfach reflektierte Wärmestrahlung (Strahl 4a). Dies führt zu Ungenauigkeiten bei der Bestimmung des Emissionsgrades des Messobjektes 3.

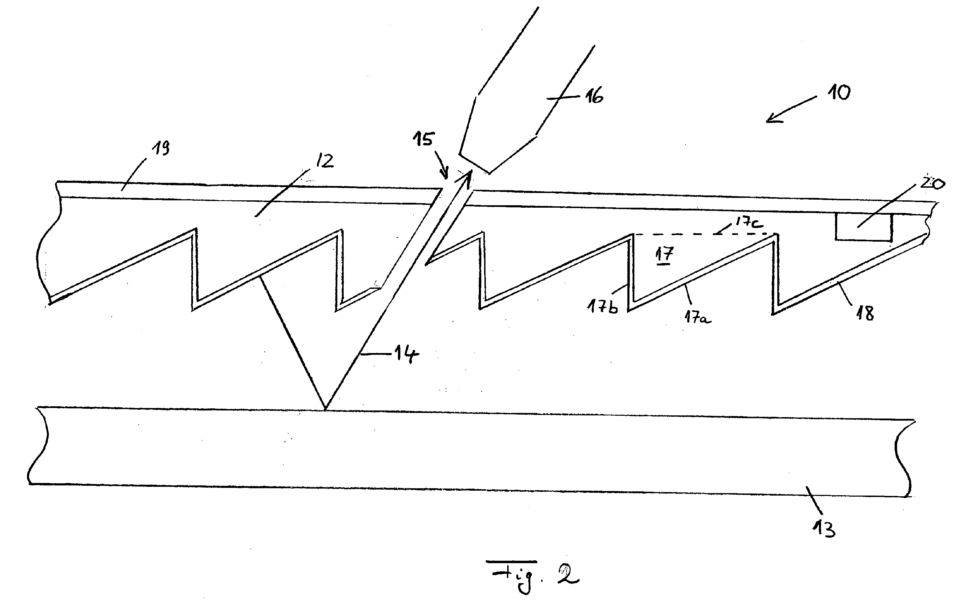

Figur 2 zeigt schematisch eine Messvorrichtung 10 nach einer Ausgestaltung der Erfindung. Die Messvorrichtung 10 umfasst eine Referenztemperaturplatte 12, die auf eine vorbestimmte Temperatur vorgewärmt ist und Wärmestrahlung 14 auf ein Messobjekt 13 abstrahlt, dessen Emissionsgrad bestimmt werden soll. Die Referenztemperaturplatte 12 weist eine Öffnung 15 auf, durch die vom Messobjekt 13 abgestrahlte und reflektierte Strahlung durch die Referenztemperaturplatte 12 auf einen in der Nähe der Öffnung 15 angeordneten Sensor (z.B. Pyrometer) 16 fällt. Die von dem Sensor 16 erfasste Wärmestrahlung wird durch diesen in ein elektrisches Signal umgewandelt.

Die Oberfläche der Referenztemperaturplatte 12 ist strukturiert. Die Oberflächenstruktur ist derart gewählt, dass verhindert wird, dass mehrfach zwischen der Referenztemperaturplatte 12 und dem Messobjekt 3 hin und her reflektierte Wärmestrahlung durch die Öffnung 15 gelangt und durch den Sensor erfasst wird. Anders ausgedrückt erfasst der Sensor 16 ausschließlich Wärmestrahlung, die direkt abgestrahlt oder direkt (einfach) durch die Oberfläche des Messobjektes auf den Sensor 16 reflektiert wird, wie durch den Strahl 14 beispielhaft dargestellt.

Die Oberfläche der Referenztemperaturplatte 12 besteht aus einer Vielzahl von zueinander parallelen Graten oder Kämmen. Im Querschnitt entspricht dies einer gezackten Struktur, wie in Figur 2 dargestellt. Anders ausgedrückt entsprechen die Grate oder Kämme im Querschnitt aneinandergereihten, zueinander identischen, gedachten Dreiecken 17, deren erste Seiten 17a der Oberfläche des Messobjektes 3 zugewandt sind, deren zweite Seiten 17b senkrecht zur Oberfläche des Messobjektes 3 verlaufen, und deren dritte Seiten 17c parallel zur Oberfläche des Messobjektes 3 verlaufen. Allgemeiner ausgedrückt verläuft die Oberfläche der Referenztemperaturplatte 12 an keiner Stelle parallel zur Oberfläche des Messobjektes 3.

Die Referenztemperaturplatte 12 besteht vorzugsweise aus Kupfer, wodurch eine gleichmäßige Wärmeverteilung erreicht wird. In der illustrierten Ausgestaltung weist die Referenztemperaturplatte 12 außerdem eine Beschichtung 18, insbesondere einen Oberflächenlack auf, der eine verbesserte Wärmeabstrahlung gewährleisten soll. Auf der dem Messobjekt 3 abgewandten Seite der Referenztemperaturplatte 12 ist eine temperierte Aluminiumplatte 19 vorgesehen- Kupfer hat eine höhere Wärmeleitfähigkeit als Aluminium und stellt damit gegenüber der beheizten Aluminiumgrundplatte einen thermischen Kurzschluss dar. Dieser führt zu einer homogenen Temperaturverteilung. Darüber hinaus ist in oder an der Referenztemperaturplatte 12 ein Temperatursensor 20 vorgesehen, durch welchen die Temperatur der Referenztemperaturplatte 12 gemessen und kontrolliert werden kann.

Gemäß einem Verfahren zur Messung des Emissionsgrades des Messobjektes 13 nach einer Ausgestaltung der Erfindung wird das Messobjekt 13 in zwei aufeinanderfolgenden Schritten mit unterschiedlicher Wärmestrahlung bestrahlt. Dazu werden zwei Messvorrichtungen des in Figur 2 dargestellten Typs verwendet. Im ersten Schritt wird das Messobjekt der ersten Messvorrichtung 10 zugeführt, wobei die Referenztemperaturplatte 12 eine erste vorbestimmte Temperatur aufweist. Die durch die Oberfläche des Messobjektes direkt abgestrahlte und einfach reflektierte Strahlung wird durch den Sensor 16 erfasst, wie oben beschrieben. Unmittelbar danach wird das Messobjekt der zweiten Messvorrichtung zugeführt, deren Referenztemperaturplatte eine von der ersten Temperatur abweichende vorbestimmte zweite Temperatur aufweist. Entsprechend wird die durch die Oberfläche des Messobjektes direkt abgestrahlte und einfach reflektierte Strahlung durch den Sensor der zweiten Messvorrichtung erfasst. Dies Ausgangssignale der Sensoren der ersten und zweiten Messvorrichtungen werden anschließend verarbeitet, um den Emissionsgrad des Messobjektes zu bestimmen, wie zu Anfang beschrieben. Da die Ausgangssignale der Sensoren keinen durch mehrfach reflektierte Strahlung verursachten Anteil aufweisen, ist eine genauere Bestimmung des Emissionsgrades möglich.

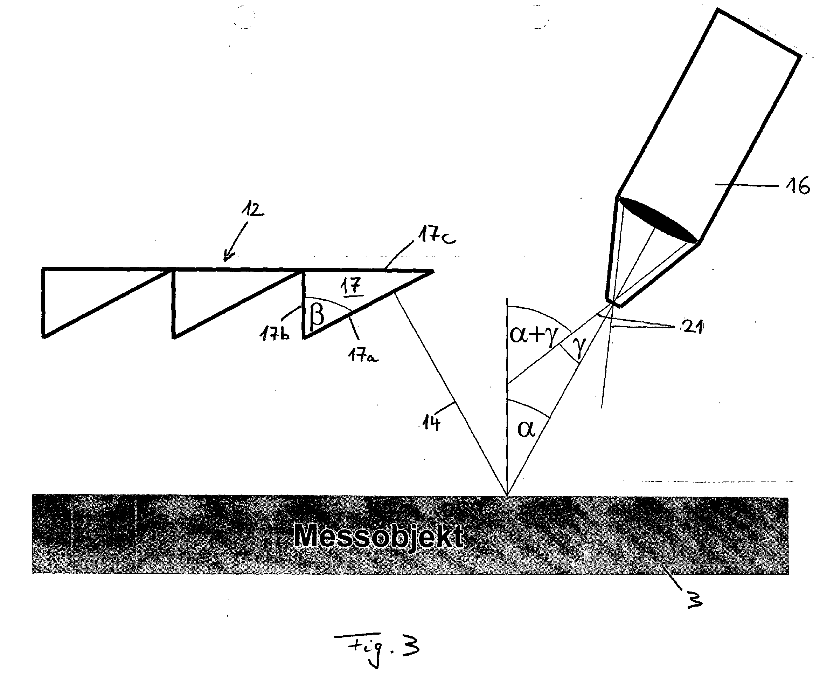

Figur 3 ist eine schematische Darstellung der Oberflächenstruktur der Referenztemperaturplatte 12 bezüglich der Anordnung des Sensors 16. Wie bereits in Bezug auf Figur 2 beschrieben ist die Oberflächenstruktur der Referenztemperaturplatte 12 im Querschnitt gezackt, wobei jeder Zacken einem gedachten Dreieck 17 mit Seiten 17a, 17b und 17c entspricht. Zwischen den Seiten 17a und 17b, die die dem Messobjekt 3 zugewandte Oberfläche der Referenztemperaturplatte 12 bilden, ist ein Winkel β eingeschlossen.

Figur 3 stellt außerdem einen Wärmestrahl 14 dar, der von der Referenztemperaturplatte 12 abgestrahlt und von dem Messobjekt 3 in Richtung zu dem Sensor 16 reflektiert wird. Der Reflexionswinkel zwischen dem auf dem Messobjekt auftreffenden und dem davon reflektierten Teil des Wärmestrahls 14 beträgt $2\alpha$.

Der Sensor 16 weist ein kegelförmiges Sicht- bzw. Erfassungsfeld auf, wobei die Erzeugenden 21 des Kegels (d.h. des Erfassungsfelds) einen Winkel $2\gamma$ einschließen.

Zwischen den Winkeln $\alpha$, $\beta$ und $\gamma$ besteht der Zusammenhang:

$$\alpha + \beta + \gamma = 90°$$

Somit wird verhindert, dass der Sensor 16 mehrfach zwischen der Referenztemperaturplatte 12 und dem Messobjekt 3 hin- und herreflektierte Wärmestrahlung erfasst.

Anzumerken ist, das beschriebene Ausführungsbeispiel lediglich beispielhafter Natur sind und die Erfindung Abwandlungen innerhalb des durch die Schutzansprüche definierten Schutzbereiches umfasst.

**Patentansprüche**

**1.** Referenztemperaturvorrichtung für eine Messanordnung zur Bestimmung der Temperatur und/oder des Emissionsgrades eines Messobjektes mit einem Sensor zur Erfassung von von dem Messobjekt abgestrahlter und reflektierter Wärmestrahlung, wobei die Referenztemperaturvorrichtung auf eine vorbestimmte Referenztemperatur aufheizbar und in der Messanordnung gegenüber dem Messobjekt anzuordnen ist, um Wärmestrahlung abhängig von der Referenztemperatur auf das Messobjekt abzustrahlen,

**dadurch gekennzeichnet, dass** die dem Messobjekt (3) zuzuwendende Oberfläche der Referenztemperaturvorrichtung (12) eine unebene Struktur aufweist, zur Verhinderung von Mehrflachreflexionen von Wärmestrahlung (14) zwischen der Referenztemperaturvorrichtung (12) und dem Messobjekt (3) vor Erreichen des Sensors (16).

2. Referenztemperaturvorrichtung nach Anspruch 1, wobei die unebene Struktur durch eine Vielzahl von zueinander parallelen Graten oder Kämmen (17) gebildet ist.

3. Referenztemperaturvorrichtung nach Anspruch 2, wobei jeder der Grate oder Kämme eine erste und eine zweite Fläche (17a, 17b) aufweist, und die ersten und zweiten Flächen (17a, 17b) einen Winkel $\beta$ einschließen, wobei der Reflexionswinkel der Wärmestrahlung (14) von der ersten Fläche (17a) auf den Sensor (16) $2\alpha$ beträgt, wobei der Sensor (16) ein kegelförmiges Erfassungsfeld aufweist, und die Erzeugenden (21) des Kegels einen Winkel $\gamma$ einschließen, und wobei $\alpha + \beta + \gamma = 90°$.

4. Referenztemperaturvorrichtung nach einem der vorhergehenden Ansprüche, wobei die Referenztemperaturvorrichtung eine Aussparung (15) aufweist, durch welche die Wärmestrahlung (14) von dem Messobjekt zu dem Sensor (16) gelangen kann.

5. Referenztemperaturvorrichtung nach einem der vorhergehenden Ansprüche, wobei die Referenztemperaturvorrichtung (12) aus Kupfer besteht.

6. Referenztemperaturvorrichtung nach einem der vorhergehenden Ansprüche, wobei die unebene Struktur eine Lackschicht (18) aufweist, deren Emissionsgrad größer als 98% ist.

7. Referenztemperaturvorrichtung nach einem der vorhergehenden Ansprüche, wobei die Referenztemperaturvorrichtung (12) an der der unebenen Struktur entgegengesetzten Seite eine Aluminiumschicht (19) aufweist.

8. Referenztemperaturvorrichtung nach einem der vorhergehenden Ansprüche, mit einem Temperatursensor (20), der im Bereich oder in der Nähe der unebenen Struktur angeordnet ist, zur Messung der vorbestimmten Referenztemperatur.

9. Messanordnung zur Bestimmung der Temperatur und/oder des Emissionsgrades eines Messobjektes, mit einer Referenztemperaturvorrichtung (12) nach einem der vorhergehenden Ansprüche.

10. Messanordnung zur Bestimmung der Temperatur und/oder des Emissionsgrades eines Messobjektes, mit einer ersten und einer zweiten Referenztemperaturvorrichtung (12) nach einem der Ansprüche 1 bis 8.

11. Verfahren zur Bestimmung des Emissionsgrades eines Messobjektes mittels einer Messanordnung nach Anspruch 9, mit folgenden Schritten:

Erwärmen der Referenztemperaturvorrichtung (12) auf eine erste und anschließend auf eine zweite vorbestimmte Referenztemperatur; und
jeweils für die erste und zweite vorbestimmte Referenztemperatur Bestimmen von durch das Messobjekt auf den Sensor (16) abgestrahlter und reflektierter Wärmestrahlung (14) zur Bestimmung des Emissionsgrades des Messobjektes (3).

12. Verfahren zur Bestimmung des Emissionsgrades eines Messobjektes mittels einer Messanordnung nach Anspruch 10, mit folgenden Schritten:

Erwärmen der ersten Referenztemperaturvorrichtung (12) auf eine erste vorbestimmte Referenztemperatur;
Erwärmen der zweiten Referenztemperaturvorrichtung (12) auf eine zweite vorbestimmte Referenztemperatur;
Bestrahlen des Messobjektes (3) mit Wärmestrahlung durch die erste und anschließend durch die zweite Referenztemperaturvorrichtung (12); und
jeweils Bestimmen von durch das Messobjekt (3) auf den Sensor (16) abgestrahlter und reflektierter Wärmestrahlung zur Bestimmung des Emissionsgrades des Messobjektes (3).

Fig. 1

Fig. 2

Fig. 3

EP 1 744 133 A1

**Europäisches Patentamt**

**EUROPÄISCHER RECHERCHENBERICHT**

Nummer der Anmeldung

EP 06 01 4578

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 375 350 B1 (STEIN ALEXANDER [US]) 23. April 2002 (2002-04-23) * Spalte 2, Zeilen 53-68; Abbildung 1 * ----- | 1,2,4,5, 8 | INV. G01J5/00 G01J5/52 |
| X | US 2 611 541 A (GRAY WILLIAM T) 23. September 1952 (1952-09-23) * Spalte 6, Zeilen 14-40; Abbildungen 1,1A * ----- | 1,2,4-6, 8 | |
| A | US 3 796 099 A (SHIMOTSUMA T ET AL) 12. März 1974 (1974-03-12) * Spalte 2, Zeile 45 - Spalte 3, Zeile 27; Abbildungen 1,2 * * Spalte 4, Zeile 34 - Zeile 43 * ----- | 1-12 | |
| A | JP 03 067137 A (CHINO CORP) 22. März 1991 (1991-03-22) * Zusammenfassung; Abbildung 1 * ----- | 1 | |

RECHERCHIERTE SACHGEBIETE (IPC)

G01J

Der vorliegende Recherchenbericht wurde für alle Patentansprüche erstellt

| Recherchenort | Abschlußdatum der Recherche | Prüfer |
|---|---|---|
| München | 18. Oktober 2006 | Hambach, Dirk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 4578

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 6375350 | B1 | 23-04-2002 | AT | 240508 T | 15-05-2003 |
| | | | DE | 50100242 D1 | 18-06-2003 |
| | | | DK | 1180669 T3 | 08-09-2003 |
| | | | EP | 1180669 A1 | 20-02-2002 |
| | | | ES | 2194815 T3 | 01-12-2003 |
| US 2611541 | A | 23-09-1952 | KEINE | | |
| US 3796099 | A | 12-03-1974 | DE | 2262737 A1 | 12-07-1973 |
| | | | FR | 2166072 A1 | 10-08-1973 |
| | | | GB | 1401778 A | 30-07-1975 |
| | | | IT | 972844 B | 31-05-1974 |
| | | | JP | 48071688 A | 27-09-1973 |
| | | | JP | 52034230 B | 02-09-1977 |
| JP 3067137 | A | 22-03-1991 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19739338 A1

- US 6747607 B1